**Europäisches Patentamt**

**European Patent Office**

**Office européen des brevets**

(19)

(11) Veröffentlichungsnummer: **0 110 015**

**B1**

(12)

# EUROPÄISCHE PATENTSCHRIFT

(45) Veröffentlichungstag der Patentschrift:
**29.03.89**

(21) Anmeldenummer: **83108214.4**

(22) Anmeldetag: **19.08.83**

(51) Int. Cl.⁴: **H 04 L 11/16,** G 06 F 13/36

(54) **Verfahren zur Steuerung des Zugriffs von Datenübertragungseinrichtungen auf eine gemeinsame Busleitung.**

(30) Priorität: **29.10.82 DE 3240206**
**11.11.82 DE 3241777**

(43) Veröffentlichungstag der Anmeldung:
**13.06.84 Patentblatt 84/24**

(45) Bekanntmachung des Hinweises auf die Patenterteilung:
**29.03.89 Patentblatt 89/13**

(84) Benannte Vertragsstaaten:
**AT BE CH DE FR GB LI NL**

(56) Entgegenhaltungen:
**EP-A-0 100 594**
**FR-A-2 476 871**
**US-A-3 796 992**
**US-A-3 887 902**

(73) Patentinhaber: **Siemens Aktiengesellschaft Berlin und München, Wittelsbacherplatz 2, D-8000 München 2 (DE)**

(72) Erfinder: **Schwarz, Karlheinz, Dipl.- Ing., Vogesenstrasse 47, D-7500 Karlsruhe (DE)**

LIBER, STOCKHOLM 1989

## Beschreibung

Die Erfindung bezieht sich auf ein Verfahren zur Steuerung des Zugriffs von Datenübertragungseinrichtungen auf eine gemeinsame Busleitung mit den Merkmalen des Oberbegriffs des Anspruchs 1.

Die Buszugriffssteuerung in einer Datenübertragungseinrichtung hat die Aufgabe, die Sendewünsche der Anwender schnellstmöglich zu erfüllen. Der statistische Generationsprozeß der Nachrichten verursacht, daß mehrere Datenübertragungseinrichtungen an einem Bus gleichzeitig auf den Bus zugreifen wollen. Zu einer Zeit kann aber nur eine Datenübertragungseinrichtung Nachrichten übertragen, die übrigen Datenübertragungseinrichtungen befinden sich mit ihren Sendewünschen in einer Warteschlange. Alle angeschlossenen dezentralen Buszugriffssteuerungen haben die Aufgabe, diejenige Datenübertragungseinrichtung, die den Buszugriff erhalten soll, zu selektieren.

Aus der nachveröffentlichten EP-A-0 100 594 ist ein Verfahren der eingangs genannten Art bekannt, bei dem der jeweils höchstpriore Teilnehmer das Zugriffsverfahren gewinnt und sodann der Selektionsprozeß beendet wird.

Aus der US-A-3 796 992 ist außerdem ein Verfahren zur Steuerung des Zugriffs von Datenübertragungsanlagen auf eine gemeinsame Busleitung bekannt, bei dem eine Selektion anhand eines binärcodierten Zugriffsdatenwortes vorgenommen wird. Auch hier ist ein Abbruch der Selektion nach Ermittlung des höchstprioren Teilnehmers vorgesehen.

Bei einem weiteren bekannten Verfahren dieser Art (DE-OS-2 557 896) ist mit Hilfe einer Überlagerungserkennungseinrichtung (Kollisionsdetektor) sichergestellt, daß bei gleichzeitigem Aussenden von Nachrichten auf die gemeinsame Busleitung ein Signal zur Unterbrechung der Aussendung generiert wird. Die Erkennung einer Überlagerung (Kollision) wird mit Hilfe von Signalvergleichern durchgeführt, die in jeder Datenübertragungseinrichtung enthalten sind und direkt mit den Signalen beaufschlagt werden, die von der Busleitung empfangen werden. Nach einer auf die doppelte Laufzeit innerhalb der Busleitung begrenzten Überlagerungszeit kann von den Datenübertragungseinrichtungen ein erneuter Sendeversuch erst nach Ablauf einer durch einen Zufallsgenerator vorgegebenen Zeit, die ein Vielfaches der Laufzeit beträgt, erfolgen. Dieses Verfahren hat den Nachteil, daß der Zugriff von sendewilligen Datenübertragungseinrichtungen infolge der statistischen Gesetzmäßigkeiten des Zufallsgenerators nicht bestimmbar ist. Weiterhin läßt sich mit diesem Verfahren den angeschlossenen Datenübertragungseinrichtungen kein vorgegebener Prioritätsrang zuordnen. Das bekannte Verfahren zur Steuerung des Zugriffs ist daher für Echtzeitanwendung des gesamten Datenübertragungssystems nur bedingt einsetzbar.

Bei dem eingangs beschriebenen Verfahren nach der EP-A-0 100 594 erfolgt der Zugriff einer Datenübertragungseinrichtung auf die Busleitung nur dann, wenn die Datenübertragungseinrichtung gegenüber allen anderen Datenübertragungseinrichtungen einen durch die Zusammensetzung des Zugriffssignals bestimmten höheren Prioritätsrang aufweist. Die Prioritäten können hierbei variabel oder konstant sein; sie können beispielsweise auch durch die von der Datenübertragungseinrichtung zu übertragende Nachricht festgelegt werden. Zur eindeutigen Entscheidung, welche der Datenübertragungseinrichtungen die höchste Priorität besitzt, wird somit zusätzlich ein Überlagerungssignal erzeugt, das der jeweiligen Datenübertragungseinrichtung mitteilt, ob eine weitere Datenübertragungseinrichtung einen Zugriff auf die gemeinsame Busleitung anfordert.

Die Beendigung der Datenübertragung einer aktiv mit der Busleitung verbundenen Datenübertragungseinrichtung und damit die Möglichkeit eines Zugriffs von anderen anfordernden Datenübertragungseinrichtungen erfolgt beispielsweise durch Prüfung, ob ein für eine Datenübertragung notwendiges Trägersignal sich auf der Busleitung befindet. Ist ein solches Trägersignal nicht (bzw. nicht mehr) vorhanden, so senden die anfordernden Datenübertragungseinrichtungen ihr Zugriffssignal aus.

In einfacher Weise ist ein jeweils jeder Datenübertragungseinrichtung zugeordnetes Zugriffsdatenwort als Zugriffssignal in binärcodierter Form so aufgebaut, daß dadurch jeder Datenübertragungseinrichtung ein Prioritätsrang vorgegeben ist. Das Zugriffssignal stellt hierbei ein Datenwort dar, dessen binäre Elemente (log. "1" oder log. "0") seriell übertragen werden, wobei durch die Anordnung der binären Elemente der Prioritätsrang eindeutig einer Datenübertragungseinrichtung zugeordnet werden kann.

Bekannt ist weiterhin ein Verfahren zum Übertragen von Datensignalen (DE-OS-3 009 308), bei dem jeder Teilnehmer zur Einleitung einer Datenübertragung bitweise Prioritätsnummern auf die gemeinsame Busleitung schaltet. Alle Teilnehmerstationen bilden hierbei zusammen mit der Busleitung Wired-OR-Verbindungen. Die Beendigung der Datenübertragung einer aktiv mit der Busleitung verbundenen Datenübertragungseinrichtung wird den anderen anfordernden Datenübertragungseinrichtungen durch Übersendung eines Zugriffsanforderungssignals mitgeteilt. Bei diesem bekannten Verfahren weist jeder Zugriffsentscheidungsprozeß eine konstante Anzahl von Verfahrensschritten auf, die direkt dem Logarithmus dualis der Anzahl der angeschlossenen Datenübertragungseinrichtungen proportional und nicht verminderbar ist.

Der Erfindung liegt die Aufgabe zugrunde, ein Verfahren und eine Vorrichtung zur Steuerung des Zugriffs von Datenübertragungseinrichtungen auf eine gemeinsame Busleitung zu schaffen, bei dem eine kurze Zugriffszeit auch dann gewährleistet ist, wenn mehrere Datenübertragungseinrichtungen einen solchen Zugriff gleichzeitig anfordern.

Zur Lösung dieser Aufgabe werden bei einem Verfahren der eingangs angegebenen Art die Merkmale im Kennzeichen des Anspruchs 1 angewandt.

Gemäß der Erfindung wird in vorteilhafter Weise im ersten von aufeinanderfolgenden Verfahrensschritten ein Element (beginnend mit dem höchstwertigen Element) des eigenen binärcodierten Zugriffsdatenwortes (Zugriffssignals), des jeweils vorliegenden/nicht vorliegenden Überlagerungssignals und des empfangenen Zugriffssignals ausgewertet, wobei bei Vorhandensein des eigenen Zugriffssignals und Fehlen eines Überlagerungssignals die jeweilige Datenübertragungseinrichtung die Datenübertragung fortsetzt, bei Fehlen des eigenen Zugriffssignals und bei Vorhandensein eines Empfangssignals die jeweilige Datenübertragungseinrichtung an den weiteren Entscheidungsschritten nicht mehr teilnimmt, bei den folgenden Verfahrensschritten die Datenübertragungseinrichtung, bei der die Bedingung [S ∧ ÜE] erfüllt ist, in der Reihenfolge der Verfahrensschritte in eine Warteposition gebracht wird und die Datenübertragungseinrichtung, die die letzte Warteposition einnimmt, nach Beendigung der Datenübertragung eine neue Folge der Verfahrensschritte initiiert.

Diesem Verfahren liegt die Idee zugrunde, den Zugriffskonflikt, der bei mehreren gleichzeitigen Sendewünschen auftritt, so aufzulösen, daß während einer Zugriffsentscheidungssequenz mehrere Teilnehmer mit Datenübertragungseinrichtungen aus der Menge aller anfordernden Teilnehmer eine Sendeberechtigung erhalten. Die so selektierten busanfordernden Teilnehmer befinden sich entsprechend ihrem Prioritätskennwort nach der Entscheidung in einer Warteschlange. Sie werden durch die einzige Bedieneinheit (Bus) entsprechend ihrer Priorität nacheinander bedient, ohne daß ein erneuter Buszugriff stattfinden muß. Pro Entscheidungssequenz, die aus 1d N Verfahrens- bzw. Entscheidungsschritten besteht, können bis zu 1 + 1d N (N Anzahl der Teilnehmer) anfordernde Teilnehmer in die Warteschlange aufgenommen werden. Der Zugriff auf den Bus darf nur dann erfolgen, wenn eine Datenübertragungseinrichtung bzw. die von ihr zu sendende Nachricht gegenüber allen anderen Datenübertragungseinrichtungen bzw. Nachrichten ein höherpriores Prioritätskennwort besitzt. Die Prioritäten sind dabei variabel oder konstant. Zur Entscheidung, welche Datenübertragungseinrichtungen bzw. Nachrichten die höheren Prioritäten besitzen, d. h. in die Warteschlange aufgenommen werden, werden die binärcodierten Prioritätskennwörter, das Sende-, Empfangs- und Überlagerungserkennungssignal herangezogen.

Eine weitere Ausführungsform des erfindungsgemäßen Verfahrens ist besonders im Hochlastbereich der Datenübertragung, d. h. bei sehr vielen gleichzeitigen Sendewünschen, durch schnelle Selektierung der Teilnehmer vorteilhaft. Hierbei wird in jeweils einem von aufeinanderfolgenden Verfahrensschritten eine Entscheidung über die Warteposition in einer Warteschlange zwischen jeweils zwei der Datenübertragungseinrichtungen vorgenommen, wobei bei gleichzeitiger Zugriffsanforderung (Zugriffssignal) der beiden Datenübertragungseinrichtungen die Einrichtung mit der jeweils höheren Priorität die n + 1-te Warteposition (im ersten Verfahrensschritt n = 0) und die andere Einrichtung die n + 2-te Warteposition einnimmt und bei einer Zugriffsanforderung nur einer Datenübertragungseinrichtung die n-te und bei keiner Zugriffsanforderung der Einrichtungen keine Warteposition eingenommen wird sowie der Zugriff auf die Busleitung in der Reihenfolge der Wartepositionen erfolgt.

Die Erfindung wird anhand der Figuren erläutert, wobei

Figur 1     Prinzipschaltbilder von Datenübertragungseinrichtungen und ihrer gemeinsamen Busleitung,

Figur 2     eine Prinzipdarstellung der Verfahrensschritte mit vorgegebenen Zugriffssignalen und

Figur 3     und Figur 4 weitere Prinzipdarstellungen von Verfahrensschritten zeigen.

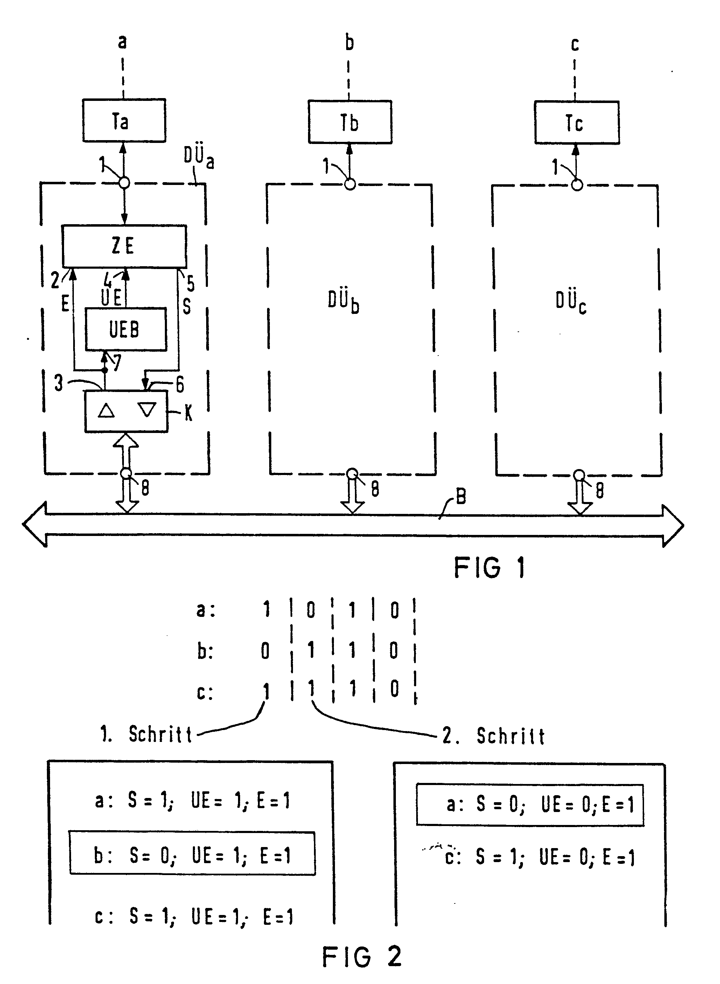

Im Prinzipschaltbild nach der Figur 1 sind Datenübertragungs einrichtungen DÜ$_a$, DÜ$_b$ und DÜ$_c$ eingezeichnet, mit denen die Übertragung von Daten von Anwenderbausteinen T$_a$, T$_b$, T$_c$ auf die gemeinsame Busleitung B und umgekehrt bewirkt werden kann. Die detailliert gezeichnete Datenübertragungseinrichtung DÜ$_a$ enthält einen Zugriffsentscheidungsbaustein ZE, der über den Eingang 1 der Datenübertragungseinrichtung DÜ$_a$ mit dem Anwenderbaustein T$_a$ verbunden ist. Ferner ist ein Überlagerungserkennungsbaustein UEB und ein Koppelbaustein K als Bestandteil der Datenübertragungseinrichtung DÜ$_a$ vorhanden. Ein erster Eingang 2 des Zugriffsentscheidungsbausteins ZE ist mit einem ersten Ausgang 3 des Koppelbausteins K verbunden; ein zweiter Eingang 4 ist mit dem Ausgang des Überlagerungserkennungsbausteins UEB verbunden, und ein Ausgang 5 des Zugriffsentscheidungsbausteins ZE ist mit einem Eingang 6 des Koppelbausteins K verbunden. Der Eingang 7 des Überlagerungserkennungsbausteins UEB ist an den Ausgang 3 des Koppelbausteins K angeschaltet. Der Ausgang des Koppelbausteins K ist über den Ausgang 8 der Datenübertragungseinrichtung DÜ$_a$ mit der gemeinsamen Busleitung 9 verbunden.

Die Funktion der Anordnung nach der Figur 1 soll anhand der in der Figur 2 dargestellten binärcodierten Zugriffsdatenwörter als Zugriffssignale erläutert werden. Es ist hierbei angenommen, daß die Datenübertragungseinrichtung DÜ$_a$ des Teilnehmers a ein binärcodiertes Zugriffsdatenwort in der Form 1 0 1 0 aufweist. Dem Teilnehmer b ist das Zugriffsdatenwort 0 1 1 0 und dem Teilnehmer c das Zugriffsdatenwort 1 1 1 0 zugewiesen. Von allen an der Zugriffsentscheidung teilnehmenden Datenübertragungseinrichtungen wird das höchstwertige Element ihres Zugriffssignals gesendet und damit der erste Verfahrensschritt durchgeführt. Während des ersten Verfahrensschrittes werden die jeweils höchstwertigen Elemente der binärcodierten Zugriffssignale in dem Zugriffsentscheidungsbaustein der Datenübertragungseinheiten DÜ$_a$, DÜ$_b$ und DÜ$_c$ ausgewertet. Es ergeben sich hierbei die in der ersten Reihe dem Teilnehmer a zugeordneten Verhältnisse der Signale des Zugriffsentscheidungsbausteins ZE.

Die Größe S stellt hierbei das entsprechende Element des jeweils von der eigenen Datenübertragungseinheit gesendeten Zugriffssignals dar; die Größe Ü repräsentiert mit einer log. "1" den Fall, daß mehr als ein Teilnehmer ein Element mit einer log. "1" (inklusive der eigenen Datenübertragungseinrichtung) aussendet, und mit einer log. "0" den Fall, daß nur eine oder keine log. "1" auf der Busleitung B vorhanden ist. Die Größe E stellt ein von der jeweiligen Datenübertragungseinrichtung empfangenes Zugriffssignal dar, die für den Fall, daß mindestens ein Teilnehmer eine log. "1" an der entsprechenden Stelle aussendet, ebenfalls "1" ist.

Der Zugriffsentscheidungsbaustein ZE des Teilnehmers a entscheidet somit für das erste Element der binären Zugriffssignale, daß a und mindestens eine weitere Datenübertragungs einheit (hier Datenübertragungseinheit DÜ$_c$) eine log. "1" senden. Da mehr als eine log. "1" auf der Busleitung B vorhanden ist, detektiert der Überlagerungserkennungsbaustein UEB diese Überlagerung.

Beim Teilnehmer b weist die erste Stelle eine log. "0" auf, so daß die Größe S ebenfalls "0" ist und der Teilnehmer b über die Datenübertragungseinrichtung DÜ$_b$ am weiteren Zugriffsentscheidungsprozeß nicht mehr teilnimmt.

Beim Teilnehmer c liegen die gleichen Verhältnisse wie beim Teilnehmer a vor.

Während des zweiten Verfahrensschrittes werden die jeweils zweiten Elemente des binärcodierten Zugriffssignals ausgewertet, wobei sich für den Teilnehmer a die dargestellten Verhaltnisse ergeben, da nunmehr nur noch vom Teilnehmer c eine log. "1" gesendet wird, jedoch der Teilnehmer a aufgrund der log. "0" an dieser Stelle des Zugriffsdatenwortes ein Element niedrigerer Priorität aufweist. Der Teilnehmer a nimmt also an der weiteren Zugriffsentscheidung nicht mehr teil. Nach diesem zweiten Verfahrensschritt ist somit erreicht, daß der Teilnehmer c über die Datenübertragungseinrichtung DÜ$_c$ als einziger die Datenübertragung weiter fortsetzen darf, da schon nach dem zweiten Verfahrensschritt erkannt ist, daß dieser Datenübertragungseinrichtung DÜ$_c$ das Zugriffssignal mit dem höchsten Prioritätsrang zugeordnet ist.

Zwar ist bei dem hier dargestellten Beispiel davon ausgegangen, daß die Datenübertragungseinrichtungen ein vierstelliges Zugriffsdatenwort enthalten, so daß maximal 16 Teilnehmer an die gemeinsame Busleitung B angeschlossen werden können. Bei entsprechend mehrstelligen Zugriffsdatenwörtern ist hier jedoch eine weitere Erhöhung der Anzahl der angeschlossenen Datenübertragungseinrichtungen möglich. Es ist mit dem erfindungsgemäßen Verfahren sichergestellt, daß schon nach wenigen Verfahrensschritten der Zugriff einer Datenübertragungseinrichtung auf die gemeinsame Busleitung B erfolgen kann, wobei die Zugriffszeit nicht eine Funktion der Anzahl der angeschlossenen Datenübertragungseinrichtungen und eventuell zusätzlicher Prioritätsstufen ist, sondern von der Anzahl der an dem jeweiligen Zugriffsentscheidungsprozeß teilnehmenden Datenübertragungseinrichtungen abhängt.

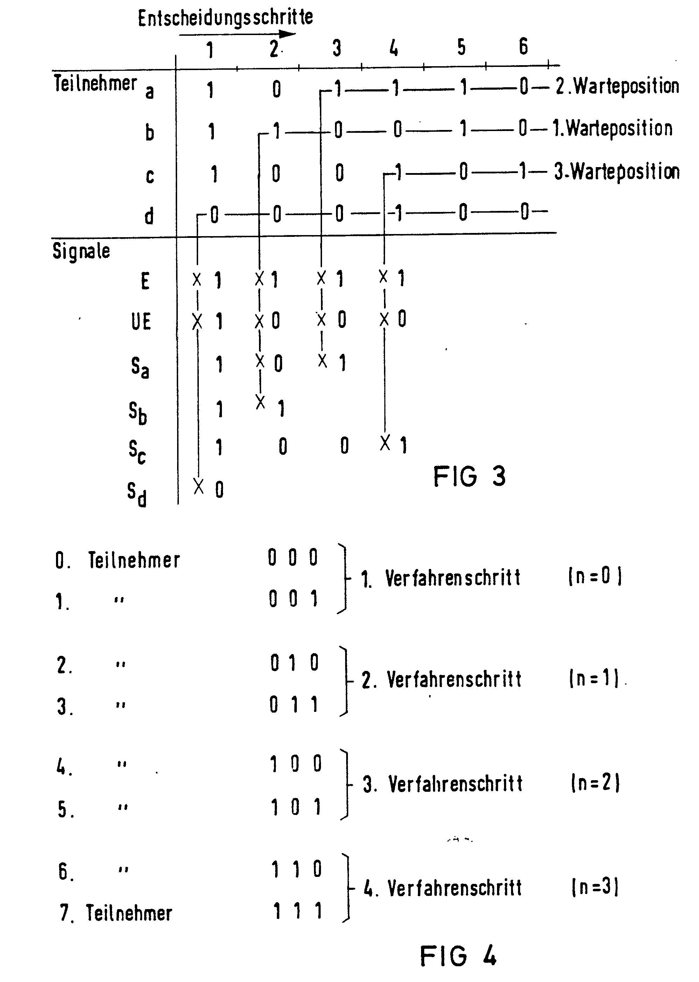

In der Figur 3 ist eine Prinzipdarstellung eines Funktionsablaufs bei der Zugriffsentscheidung mit vier Teilnehmern a, b, c und d aus insgesamt 64 Teilnehmern mit entsprechenden Datenübertragungseinrichtungen dargestellt. Bei diesem Beispiel sind die Zugriffsdatenwörter sechsstellig, entsprechend dem Logarithmus dualis 64, somit sind auch sechs Entscheidungs- bzw. Verfahrensschritte erforderlich. Während der sechs Entscheidungsschritte werden beim dargestellten Beispiel drei Teilnehmer selektiert, so daß hier die Teilnehmer a, b und c in entsprechende Wartepositionen gelangen. Der Entscheidungsprozeß wird nicht, wie beim Beispiel nach der Figur 2, abgebrochen, sobald ein Teilnehmer die Signalkombinationen S und ÜE und E erkennt, sondern dieser Teilnehmer erhält die erste Warteposition in einer Warteschlange und nimmt an den weiteren Entscheidungsschritten nicht mehr teil. Die übrigen Teilnehmer, bis auf diejenigen, die mit [S ∧ UE] unterliegen, nehmen an den weiteren Entscheidungsschritten teil. Beim dargestellten Beispiel ergibt sich somit, daß beim ersten Entscheidungsschritt der Teilnehmer d aus dem Entscheidungsprozeß herausfällt, da er selber kein Signal sendet (S = 0) und gleichzeitig ein Überlagerungssignal (UE = 1) erkennt. Beim zweiten Entscheidungsschritt sendet nur der Teilnehmer b ein Signal (S = 1), so daß ihm die erste Warteposition zufällt. Im dritten Entscheidungsschritt sendet nur der Teilnehmer a eine log. "1", so daß ihm die zweite Warteposition zufällt. Während des vierten Entscheidungsschrittes bekommt der Teilnehmer c die dritte Warteposition zugeordnet, da er zu diesem Zeitpunkt eine log. "1" in seinem Zugriffsdatenwort aussendet. Weiterhin ist vorgesehen, daß alle anfordernden Teilnehmer die Anzahl der Teilnehmer, die vor ihnen eine Warteposition eingenommen haben, zählen, damit sie wissen, welche Wartepositionen ihnen zugefallen ist. Der letzte Teilnehmer initiiert sodann die nächste Entscheidungssequenz nach seiner Datenübertragung.

Im Mittel werden pro Teilnehmer und pro Buszugriff etwa (1d N) : 2 Entscheidungsschritte benötigt, wodurch sich eine wesentliche Verringerung der Zugriffsdauer ergibt und die eigentliche Datenübertragung effektiviert werden kann.

Besonders im Hochlastbereich der Datenübertragung mit einer Vielzahl von Teilnehmern, die gleichzeitig zugreifen möchten, ist es möglich, die Entscheidung über die Warteposition zwischen jeweils zwei der Datenübertragungseinrichtungen zu treffen. Beispielsweise können diese Zweiergruppen durch die Bestandteile ihrer Zugriffssignale (Zugriffsdatenwörter) gebildet werden, wie in der Figur 4 dargestellt. Hier sind die ersten beiden Bits des Zugriffsdatenworts einer Gruppe jeweils identisch. In den einzelnen Verfahrensschritten (n = 0 bis n = 3) wird somit jeweils die Entscheidung zwischen diesen beiden Datenübertragungseinrichtungen getroffen. Hier gewinnt somit, z. B. im Verfahrensschritt n = 0, der erste Teilnehmer aufgrund seines höherprioren Zugriffssignals 001 gegenüber 000 und erhält eine frühere Warteposition in der Warteschlange und somit den schnelleren Zugriff auf die Busleitung.

**Patentansprüche**

1. Verfahren zur Steuerung des Zugriffs von Datenübertragungseinrichtungen auf eine gemeinsame Busleitung (B), bei dem
- der gleichzeitige Zugriff von mehreren Datenübertragungseinrichtungen ($D\ddot{U}_a$, $D\ddot{U}_b$, $D\ddot{U}_c$) auf die Busleitung (B) erkannt und ausgewertet wird,
- von den Datenübertragungseinrichtungen ($D\ddot{U}_a$, $D\ddot{U}_b$, $D\ddot{U}_c$), die einen Zugriff auf die gemeinsame Busleitung (B) anfordern, ein Zugriffssignal (S) ausgesandt wird,
- alle anfordernden Datenübertragungseinrichtungen ($D\ddot{U}_a$, $D\ddot{U}_b$, $D\ddot{U}_c$) alle Zugriffssignale (S) auswerten und
- in jeder der am Zugriff teilnehmenden Datenübertragungseinrichtung ($D\ddot{U}_a$, $D\ddot{U}_b$, $D\ddot{U}_c$) ein Überlagerungssignal (UE) generiert wird, wenn von mehr als einer der Datenübertragungseinrichtungen ($D\ddot{U}_a$, $D\ddot{U}_b$, $D\ddot{U}_c$) zum selben Zeitpunkt ein Zugriffssignal (S) mit gleichem vorgegebenem logischen und hochprioren Zustand ausgesendet wird,
dadurch gekennzeichnet, daß
- im ersten von aufeinanderfolgenden Verfahrensschritten ein Element, beginnend mit dem höchstwertigen Elemente des eigenen binärcodierten Zugriffsdatenwortes (Zugriffssignal (S)), des jeweils vorliegenden/nicht vorliegenden Überlagerungssignals (UE) und des empfangenen Zugriffssignals (E) ausgewertet wird, wobei
- bei Vorhandensein des eigenen Zugriffssignals (S) und Fehlen eines Überlagerungssignals [S $\wedge$ $\overline{UE}$] die jeweilige Datenübertragungseinrichtung ($D\ddot{U}_a$, $D\ddot{U}_b$, $D\ddot{U}_c$) die erste Warteposition in einer Warteschlange einnimmt und an den weiteren Verfahrensschritten nicht mehr teilnimmt,
- bei Fehlen des eigenen Zugriffssignals (S) und bei Vorhandensein eines Empfangssignals (E) [$\overline{S}$ $\wedge$ E] die jeweilige Datenübertragungseinrichtung ($D\ddot{U}_a$, $D\ddot{U}_b$, $D\ddot{U}_c$) an den weiteren Verfahrensschritten ebenfalls nicht mehr teilnimmt und
- bei Vorhandensein des eigenen Zugriffssignals (S) und eines Überlagerungssignals (UE) [S $\wedge$ UE] oder bei Fehlen des eigenen Zugriffssignals (S) und des Empfangssignals (E) [$\overline{S}$ $\wedge$ $\overline{E}$] die jeweilige Datenübertragungseinrichtung an den weiteren Verfahrensschritten teilnimmt,
und daß
- bei den folgenden Verfahrensschritten die Datenübertragungseinrichtung ($D\ddot{U}_a$, $D\ddot{U}_b$, $D\ddot{U}_c$), bei der die Bedingung [S $\wedge$ $\overline{UE}$] erfüllt ist, in der Reihenfolge der Verfahrensschritte in eine nächste Warteposition gebracht wird und an den weiteren Verfahrensschritten nicht mehr teilnimmt.

2. Verfahren nach Anspruch 1, dadurch gekennzeichnet, daß
- in jeweils einem von aufeinanderfolgenden Verfahrensschritten eine Entscheidung über die Warteposition in einer Warteschlange zwischen jeweils zwei der Datenübertragungseinrichtungen ($D\ddot{U}_a$, $D\ddot{U}_b$, $D\ddot{U}_c$) vorgenommen wird, wobei
- bei gleichzeitiger Zugriffsanforderung der beiden Datenübertragungseinrichtungen beide dasselbe logische und hochpriore Zugriffssignal (S) senden [S $\wedge$ UE] und die Einrichtung mit der jeweils höheren Priorität die n + 1-te Warteposition (im ersten Verfahrensschritt n = 0) und die andere Einrichtung die n + 2-te Warteposition einnimmt und
- bei einer Zugriffsanforderung nur einer Datenübertragungseinrichtung [S ∧ ŪĒ] die n-te und bei keiner Zugriffsanforderung der Einrichtung [Ē] keine Warteposition eingenommen wird sowie
- der Zugriff auf die Busleitung in der Reihenfolge der Wartepositionen erfolgt.

3. Verfahren nach Anspruch 1 oder 2, <u>dadurch gekennzeichnet</u>, daß
- die Datenübertragung in der Reihenfolge der Warteposition lückenlos durchgeführt wird und die Datenübertragungseinrichtung (DÜ$_a$, DÜ$_b$, DÜ$_c$), die die letzte Warteposition einnimmt, nach Beendigung der Datenübertragung eine neue Folge der Verfahrensschritte initiiert.

**Revendications**

1. Procédé pour commander l'accès de dispositifs de transmission de données à une ligne commune formant bus (B), selon lequel
- l'accès simultané de plusieurs dispositifs de transmission de données (DÜ$_a$, DÜ$_b$, DÜ$_c$) à la ligne formant bus (B) est identifié et évalué,
- un signal d'accès (S) est émis par les dispositifs de transmission de données (DÜ$_a$, DÜ$_b$, DÜ$_c$) qui demandent un accès à la ligne commune formant bus (B),
- tous les dispositifs de transmission de données (DÜ$_a$, DÜ$_b$, DÜ$_c$) demandeurs évaluent tous les signaux d'accès (S), et
- un signal de superposition (UE) est produit dans chacun des dispositifs de transmission de données (DÜ$_a$, DÜ$_b$, DÜ$_c$) participant à l'accès, lorsque plus d'un des dispositifs de transmission de données (DÜ$_a$, DÜ$_b$, DÜ$_c$) émettent au même instant des signaux d'accès (S) possédant le même état logique prédéterminé, possédant une priorité élevée,
caractérisé par le fait que
- au cours de la première étape opératoire faisant partie d'étapes opératoires successives, un élément, en commençant par l'élément de poids de plus élevé, du mot proprement dit de données d'accès codé en binaire (signal d'accès (S)), du signal de superposition (UE) respectivement présent/absent et du signal d'accès reçu (E) est évalué, auquel cas
- lors de la présence du signal d'accès (S) proprement dit et de l'absence d'un signal de superposition [S ∧ ŪĒ], le dispositif respectif de transmission de données (DÜ$_a$, DÜ$_b$, DÜ$_c$) prend la première position d'attente dans une file d'attente et ne participe plus à la suite des étapes opératoires,
- dans le cas de l'absence du signal d'accès (S) proprement dit et de la présence d'un signal de réception (E) [Š ∧ E], le dispositif respectif de transmission de données (DÜ$_a$, DÜ$_b$, DÜ$_c$) ne participe également plus à la suite des étapes opératoires et,
- dans le cas de la présence du signal d'accès (S) proprement dit et d'un signal de superposition (UE) [S ∧ UE] ou dans le cas de l'absence du signal proprement dit d'accès (S) et du signal de réception (E) [Š ∧ Ē], le dispositif respectif de transmission de données participe aux étapes opératoires suivantes,
et que
- lors des étapes opératoires suivantes, le dispositif de transmission de données (DÜ$_a$, DÜ$_b$, DÜ$_c$), pour lequel la condition [S ∧ ŪĒ] est satisfaite, est amené au cours de la séquence des étapes opératoires, dans une position d'attente immédiatement suivante et ne participe plus à la suite des étapes opératoires.

2. Procédé suivant la revendication 1, caractérisé par le fait que:
- lors d'une étape opératoire respective faisant partie d'étapes opératoires successives, une décision est prise concernant la position d'attente dans une file d'attente entre respectivement deux des dispositifs de transmission de donnés (DÜ$_a$, DÜ$_b$, DÜ$_c$), auquel case
- dans le cas d'une demande simultanée d'accès des deux dispositifs de transmission de données, ces deux dispositifs émettent des signaux d'accès (S) logiques de priorité élevée [S ∧ UE], et le dispositif possédant la priorité la plus élevée prend la n + 1-ème position d'attente (lors de la première étape opératoire n = 0) et l'autre dispositif prend la n + 2-ème position d'attente, et
- dans le cas d'une demande d'accès d'un seul dispositif de transmission de données [S ∧ ŪĒ]) il prend la n-ème position d'attente, et dans le cas de l'absence d'une demande d'accès du dispositif [E], aucune position d'attente n'est occupée,
- l'accès à la ligne formant bus s'effectue dans la succession des positions d'attente.

3. Procédé suivant la revendication 1 ou 2, caractérisé par le fait que
- la transmission de données dans la séquence des positions d'attente s'effectue sans discontinuité et le dispositif de transmission de données (DÜ$_a$, DÜ$_b$, DÜ$_c$), qui occupe la dernière position d'attente, déclenche une nouvelle suite d'étapes opératoires à la fin de la transmission de données.

**Claims**

1. Method for controlling the access of data transmission units to a common bus line (B), by which method
- the simultaneous access of several data transmission units (DÜ$_a$, DÜ$_b$, DÜ$_c$) to the bus line (B) is identified and evaluated,
- from the data transmission units (DÜ$_a$, DÜ$_b$, DÜ$_c$), which request an access to the common bus line (B), there is emitted an access signal (S),
- all requesting data transmission units (DÜ$_a$, DÜ$_b$, DÜ$_c$) evaluate all access signals (S) and
- in each of the data transmission units (DÜ$_a$, DÜ$_b$, DÜ$_c$) participating in the access a superposition signal (UE) is generated if an access signal (S) with the same preset logic and high-priority state is emitted from more than one of the data transmission units (DÜ$_a$, DÜ$_b$, DÜ$_c$) at the same point of time, characterised in that
- in the first of successive method steps one element, starting with the highest value element, of the intrinsic binary coded access data word (access signal (S)), of the respectively present/not present superposition signal (UE) and of the received access signal (S) is evaluated, in which case
- in the presence of the intrinsic access signal (S) and absence of a superposition signal [S ∧ ŪĒ] the respective data transmission unit (DÜ$_a$, DÜ$_b$, DÜ$_c$) occupies the first waiting position in a waiting queue and no longer participates in the further method steps,
- in the absence of the intrinsic access signal (S) and in the presence of a receiving signal (E) [S̄ ∧ E] the respective data transmission unit (DÜ$_a$, DÜ$_b$, DÜ$_c$] likewise no longer participates in the further method steps and
- in the presence of the intrinsic access signal (S) and a superposition signal (UE) [S ∧ UE] or in the absence of the intrinsic access signal (S) and the receiving signal (E) [S̄ ∧ Ē] the respective data transmission unit participates in the further method steps,
and in that
- in the following method steps the data transmission unit (DÜ$_a$, DÜ$_b$, DÜ$_c$), in which the condition [S ∧ ŪĒ] is met, is brought, in the sequence of the method steps, into a next waiting position and no longer participates in the further method steps.

2. Method according to claim 1, characterised in that

in, in each case, one successive method step, a decision is taken on the waiting position in a waiting queue between, in each case, two of the data transmission units (DÜ$_a$, DÜ$_b$, DÜ$_c$), in which case
- with simultaneous access request of the two data transmission units both transmit the same logic and high-priority access signal (S), [S ∧ UE] and the unit with the respectively higher priority occupies the n + 1-th waiting position (in the first method step n = 0) and the other unit occupies the n + 2-th waiting position and
- with an access request of only one data transmission unit [S ∧ ŪĒ] the n-th and with no access request of the unit [Ē] no waiting position is occupied and also
- the access to the bus line takes place in the sequence of the waiting positions.

3. Method according to claim 1 or 2, characterised in that
- the data transmission is carried out in the sequence of the waiting position without interruption and the data transmission unit (DÜ$_a$, DÜ$_b$, DÜ$_c$), which occupies the last waiting position, after termination of the data transmission initiates a new series of method steps.

FIG 1

FIG 2

Entscheidungsschritte

|  |  | 1 | 2 | 3 | 4 | 5 | 6 |  |
|---|---|---|---|---|---|---|---|---|
| Teilnehmer | a | 1 | 0 | 1 | 1 | 1 | 0 | 2.Warteposition |
|  | b | 1 | 1 | 0 | 0 | 1 | 0 | 1.Warteposition |
|  | c | 1 | 0 | 0 | 1 | 0 | 1 | 3.Warteposition |
|  | d | 0 | 0 | 0 | 1 | 0 | 0 |  |
| Signale |  |  |  |  |  |  |  |  |
|  | E | X 1 | X 1 | X 1 | X 1 |  |  |  |
|  | UE | X 1 | X 0 | X 0 | X 0 |  |  |  |
|  | $S_a$ | 1 | X 0 | X 1 |  |  |  |  |
|  | $S_b$ | 1 | X 1 |  |  |  |  |  |
|  | $S_c$ | 1 | 0 | 0 | X 1 |  |  |  |
|  | $S_d$ | X 0 |  |  |  |  |  |  |

FIG 3

| 0. Teilnehmer | 0 0 0 | } 1. Verfahrenschritt | (n = 0) |
|---|---|---|---|
| 1. " | 0 0 1 |  |  |
| 2. " | 0 1 0 | } 2. Verfahrenschritt | (n = 1) |
| 3. " | 0 1 1 |  |  |
| 4. " | 1 0 0 | } 3. Verfahrenschritt | (n = 2) |
| 5. " | 1 0 1 |  |  |
| 6. " | 1 1 0 | } 4. Verfahrenschritt | (n = 3) |
| 7. Teilnehmer | 1 1 1 |  |  |

FIG 4